# EUROPEAN PATENT APPLICATION

(11) **EP 4 726 548 A1**
(43) Date of publication of application: **15.04.2026**
(21) Application number: 25207194.9
(22) Date of filing: 07.10.2025
(51) Int. Cl.: G06F 9/50, G06F 12/0842, G06N 20/00

(54) **SYSTEM AND METHOD FOR CENTRAL PROCESSING UNIT (CPU)-BASED MACHINE LEARNING TRAINING USING AFFINITIZED THREADS**

(30) Priority: 08.10.2024 US 202418909544
(71) Applicant: Microsoft Technology Licensing, LLC, Redmond, WA 98052-6399 (US)
(72) Inventor: Peretz, Ervin, Redmond, WA 98052 (US); Chappell, Robert Sommer, Redmond, WA 98052 (US)
(74) Representative: Grünecker Patent- und Rechtsanwälte PartG mbB

(57) **Abstract**

A method, computer program product, and computing system for assigning a data shard associated with a machine learning application to each CPU core of a plurality of CPU cores. The data shard of a respective CPU core is loaded to a corresponding affinitized cache memory. A processing thread for the data shard is assigned to the respective CPU core. Multiple processing threads for the data shard are executed using the same respective CPU core and the corresponding cache memory.

## Description

### Background

Machine Learning (ML) is an Artificial Intelligence (AI) methodology, involving training a predictive compute model from large amounts of labeled training data. During the training phase, each training data item is labeled with its classification (class). Once training is complete, the resulting model generalizes from the labeled examples, such that it can later perform "inference" (classification) on an unlabeled data item. A graphics processing unit (GPU) is designed to compute pixel values for display on a computer monitor. For dynamic video or game applications, it must perform many pixel updates at once, using similar operations for each pixel, all executed in lockstep. The technical mechanism for GPU parallelism is SIMD (Single Instruction, Multiple Data), which is conceptually similar to threads of execution on a CPU, but involves just a single actual execution thread, operating on many operands in parallel lockstep. Machine learning training also requires rapid parallel operations on data, with similar operations on each data element. As such, it has become common for GPUs to be used for machine learning training.

A GPU includes its own compute memory. A GPU cannot directly address a computer's regular bank memory. In high-end GPUs specialized for machine learning, this GPU global memory is expensive high-speed memory, and can be quite large. Because the GPU can only process data in its own memory, the dataset being operated on must fit in the global memory. When the dataset is very large - for example, millions of images of training data - it may exceed global GPU memory. In this case, the training algorithm applies "mini-batching" - that is, it divides the training data into batches that fit in GPU memory. Each "mini batch" processing results in a partial result (e.g., learned weights for a neural network). The results from each mini batch are then averaged by the training algorithm to generate the final machine learning model. However, GPUs require a special programming language.

Additionally, GPUs deployed in high-end servers are difficult to debug compared to debugging on CPU-based local computing devices. For example, programming for GPUs requires a special programming language, such as Compute Unified Device Architecture (CUDA). The tools and debugging facilities are different and less advanced than for standard CPU programming. Furthermore, scaling up to more advanced GPUs requires re-coding and recompilation, to take advantage of higher-end GPU features. For example, certain existing GPUs have a hierarchy of "CUDA Compute Capability Levels". A GPU-based application cannot simply adjust at runtime to make use of the available GPU hardware resources. A machine learning development project typically begins as a small project, with a small amount of data. The developer develops a machine learning model (e.g., a neural network or transformer) on a local computer. Later, more data is added, requiring more compute power. The model training is then moved to a larger server or group of servers. This may be repeatedly moved to higher-end servers, as the available training data and required compute increases. When a problem occurs, the developer typically wishes to debug locally, on a smaller dataset, back on their local computer. These switches from local machine, to a series of more powerful servers, and back to local machine are highly problematic for GPU-based training, because the various GPUs (with their various capabilities, e.g., "CUDA Compute Capability Levels") do not support the same machine learning training program binaries.

### Brief Description of the Drawings

FIG. 1 is a flow chart of one implementation of a CPU-based affinitized thread process;
FIG. 2 is a diagrammatic view of a CPU socket according to one implementation of the CPU-based affinitized thread process; and
FIG. 3 is a diagrammatic view of a computing system and the CPU-based affinitized thread process coupled to a distributed computing network.

Like reference symbols in the various drawings indicate like elements.

### Detailed Description of the Embodiments

Implementations of the present disclosure provide a process for executing machine learning applications using a central processing unit (CPU) and its corresponding cache memory with affinitized threads. For example, a highly relevant aspect of machine learning training involves repeated cycles of threading and synchronization of the training computation, over the same data items. For instance, when training a neural network using a machine learning application with image data, the training algorithm will launch many threads of computation, assigning each thread a subset of the data. Each thread will compute model parameters (e.g., numeric "weight" values between the nodes in a layer of a neural network) resulting from its subset of data. The threads are then synchronized (terminated) by the machine learning application, so that the model parameters from each thread can be combined (averaged). The launching and subsequent termination/synchronization of threads is called a "warp" of threads. The machine learning application combines results from a warp of threads and launches another "warp" of threads, assigning the same data items, to compute another set of model parameters (e.g., numeric "weight" values for the next layer in a neural network). These repeated warps of threads, computing over the same data items repeatedly, is an aspect of both GPU-based and CPU-based machine learning training.

Using CPUs to perform machine learning training is typically limited by latency associated with memory access and the slower processing speeds (relative to GPUs). For example, CPU sockets generally include cache memory, which is fast local memory for holding copies of recently or repeatedly accessed data, in order to speed up data processing. Cache memory is much smaller than the regular memory of a computer. But given its proximity to the CPU, it is much faster to read or write, thus greatly accelerating a typical computer program, which usually accesses the same data repeatedly. As discussed above, during machine learning training, there is intensive processing of the same training data repeatedly.

Implementations of the present disclosure provide enhanced CPU-based machine learning application processing using a sub-category of CPU socket-based memory, called cache memory. Examples of cache memory include Level 1 (L1), Level 2 (L2), and Level 3 (L3) cache memory. The cache memory is associated with each CPU core. In some implementations, a portion of the CPU socket's cache memory is "affinitized" to each core (i.e., the portion of cache memory is next to the core, allowing for high bandwidth, and low latency, between the CPU core and its respective cache memory).

In some implementations, the CPU-based affinitized thread process makes use of these cache memories, by sizing and confining the workload "mini-batches" to the ultra fast cache memory and then ensuring that, across thread warps, the same data shards are assigned to the same CPU cores on each warp. This allows each CPU core's processing to be accelerated, by operating entirely on data within its respective cache memory. It also allows each core's working subset of data to be pre-loaded to cache memory on each subsequent warp of threads.

Accordingly, implementations of the present disclosure first assist a machine learning training application in sizing the "mini batches" of training data for the total available cache memory (e.g., L2 cache memory). The CPU-based affinitized thread process then facilitates the assignment of the same data items to the same CPU cores and corresponding respective cache memories between thread warps. This avoids the need to repeatedly reload the training data items from bank memory into cache memory and retains execution within the fast cache memory.

The details of one or more implementations are set forth in the accompanying drawings and the description below. Other features and advantages will become apparent from the description, the drawings, and the claims.

### The CPU-based Affinitized Thread Process:

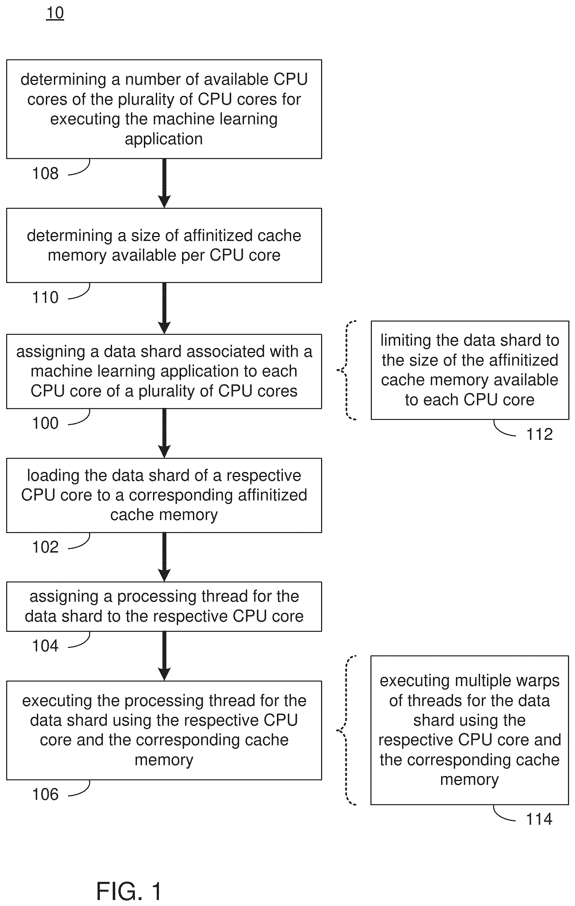

Referring to FIGS. 1-2, CPU-based affinitized thread process 10 assigns 100 a data shard associated with a machine learning application to each CPU core of a plurality of CPU cores. The data shard of a respective CPU core is loaded 102 to a corresponding affinitized cache memory. A processing thread for the data shard is assigned 104 to the respective CPU core. The processing thread for the data shard is executed 106 using the respective CPU core and the corresponding cache memory.

In some implementations, CPU-based affinitized thread process 10 determines 108 a number of available CPU cores of a plurality of CPU cores for executing a machine learning application. For example, a computing device (e.g., computing device 200) includes a plurality of CPU cores. A CPU core (e.g., CPU cores 202, 204) is a processing unit comprising a CPU processor and multiple levels of cache memory (e.g., CPU processor 206, Level 1 cache memory 208, and Level 2 cache memory 210 for CPU core 202; and CPU processor 212, Level 1 cache memory 214, and Level 2 cache memory 216 for CPU core 204). The CPU cores are effectively multiple CPU units, on a single computer chip (CPU socket 218). Multiple cores allow the CPU to execute multiple programs - or multiple "threads" (code sequences) of the same program - in parallel. High-end server CPUs now offer large numbers of CPU cores. For example, a server CPU released by Intel^{®} in 2023 had 60 CPU cores. Later generations of CPUs released by Intel^{®} and AMD^{®} in 2024 have hundreds of cores per CPU socket. A single computer motherboard may have several CPU sockets. Accordingly, this allows for thousands of CPU cores on a single computing device, all available to a single executing machine learning application.

In some implementations, CPU-based affinitized thread process 10 executes a machine learning application (e.g., machine learning application 220) using available CPU cores of a plurality of CPU cores (e.g., CPU cores 202, 204). A machine learning application is a software system that uses algorithms and/or statistical models to enable a computing device to process input data by detecting patterns within the input data and generating output data based on training of the machine learning application. In some implementations, the machine learning application is a machine learning training application. For example, there is a significant distinction between machine learning training and machine learning inference. Machine learning training (e.g., a machine learning training application) is the lengthy process of building / training a machine learning model. Machine learning inference is the application of the machine learning model, to produce an intelligent decision (i.e., a prediction or classification). For example, a machine learning training task may involve the processing of millions of labeled training images, in order to train the machine learning model (e.g., a neural network) to recognize classes of objects (e.g., dogs, cats, and birds, or any other trainable pattern). The machine learning training task may take many hours or days. It is not a real-time task, as it does not require completion in some short, fixed timeframe. As machine learning training is not real-time, there is not an imperative for raw performance. Rather, price-performance is a more effective measure of the value when considering machine learning training on a GPU versus on a CPU.

In contrast, machine learning inference is a real-time task, applying the trained machine learning model to a specific data item (e.g., to classify a single image) as a single pass on a single or a limited number of data items. Accordingly, machine learning inference is much less compute intensive, and can usually be accomplished on an ordinary low-core CPU. Neither a GPU nor high-core CPU is required for machine learning inference.

In some implementations, a relevant aspect of machine learning training is the repeated cycles of threading and synchronization of the training computation, over the same data items. For example, when training a neural network with image data, the training algorithm launches many threads of computation, assigning each thread a "shard" (subset) of the data. Each thread computes model parameters (e.g., numeric "weight" values between the nodes in a layer of a neural network) resulting from its "shard" of data. The threads are then synchronized (terminated) by the controlling algorithm, so that the model parameters from each thread can be combined (averaged). As will be discussed in greater detail below, CPU-based affinitized thread process 10 assigns particular data shards of machine learning application 220 to specific CPU cores and their corresponding affinitized cache memories (e.g., L2 cache memories).

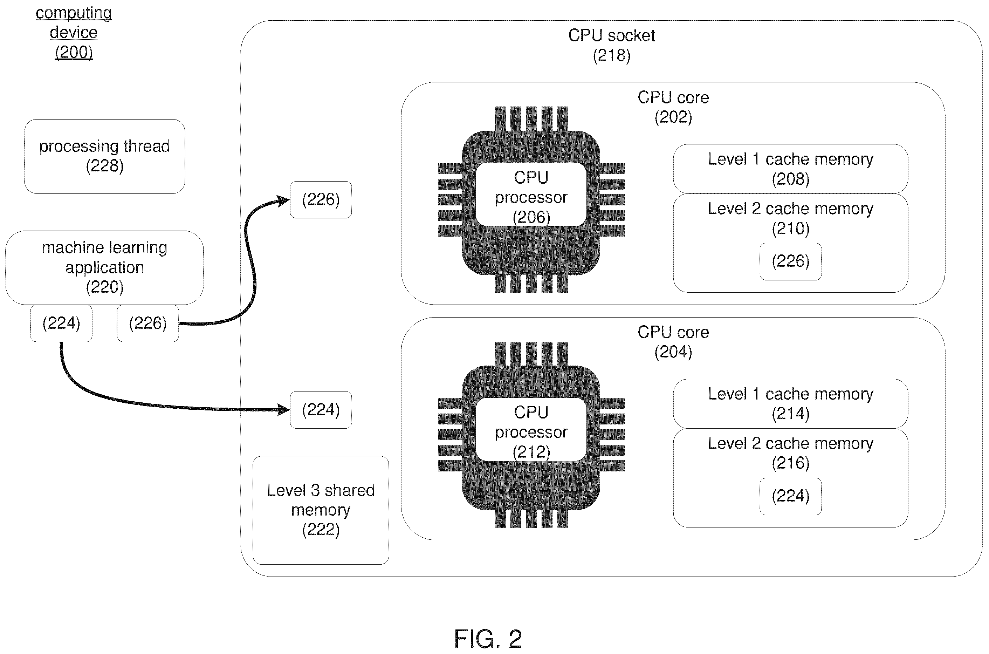

In some implementations, CPU-based affinitized thread process 10 determines 108 a number of available CPU cores of a plurality of CPU cores for executing a machine learning application. For example, CPU-based affinitized thread process 10 determines the number of available CPU cores, across all CPU sockets. Referring again to FIG. 2 and in one example, CPU-based affinitized thread process 10 determines 108 that two CPU cores (e.g., CPU cores 202, 204) are available for executing machine learning application 220. For example, it will be appreciated that a CPU socket (e.g., CPU socket 218) includes CPU cores that can be used for executing machine learning application 220 while other CPU cores execute other applications in parallel. Accordingly, CPU-based affinitized thread process 10 determines 108 the number of available CPU cores across the CPU socket(s).

In some implementations, CPU-based affinitized thread process 10 determines 110 a size of affinitized cache memory available per CPU core. For example, CPU-based affinitized thread process 10 determines the size (i.e., the number of bytes) of cache memory available per core. CPU sockets include cache memory, which is fast local memory for holding copies of recently or repeatedly accessed data, in order to speed up data processing. For instance, cache memory is much smaller than the regular memory of a computing device. Given its proximity to the CPU, cache memory is much faster to read or write data, thus greatly accelerating a typical application, which usually accesses the same data repeatedly. CPU cache memory includes multiple cache memory levels (e.g., Level 1 cache memory, Level 2 cache memory, Level 3 cache memory etc.). In some implementations, CPU-based affinitized thread process 10 uses a subset of CPU socket-based memory (L2 cache memory 210). As shown in FIG. 2, L2 cache memory is associated with each CPU core (e.g., L2 cache memory 210 with CPU core 202 and L2 cache memory 216 with CPU core 204). In some implementations, at least a portion of the CPU socket's L2 cache memory is "affinitized" to each core (i.e., that the portion of L2 cache memory is next to the core) allowing for high bandwidth, and low latency, between the CPU core and its respective corresponding L2 cache memory (e.g., CPU core 202 and L2 cache memory 210). For instance, the typical latency between a CPU core and its corresponding L2 cache memory is 1 nanosecond (1 ns) and the typical bandwidth is 1 terabit per second (1 tbps).

Although the individual L2 cache memories are small relative to a computing device's shared memory (e.g., Level 3 shared memory 222), L2 cache memory can be substantial when aggregated across all CPU cores. For example, one CPU has 256 cores per socket, with 2 megabytes (MB) of L2 cache memory per core. This amounts to 512 MB of L2 cache memory per socket. Accordingly, motherboards with dozens of such CPU sockets allow for gigabytes of L2 cache memory per computing device (e.g., a server).

In some implementations, CPU-based affinitized thread process 10 assigns 100 a data shard associated with the machine learning application to each CPU core of a plurality of CPU cores. For example, machine learning application 220 may include various features to train a machine learning model upon. In some implementations, CPU-based affinitized thread process 10 defines a plurality of data subsets by splitting the training data of machine learning application for the various features into the plurality of data shards. In one example, CPU-based affinitized thread process 10 assigns 100 the data shard associated with the machine learning application to a CPU core includes limiting 112 the data shard to the size of the affinitized L2 cache memory available to each CPU core. For example, CPU-based affinitized thread process 10 assigns 100 data shards (identified by ranges of numeric indices) of machine learning application 220 to each CPU core (e.g., CPU cores 202, 204) where the size of each data shard is limited 112 to the size of the affinitized L2 cache memory available to each CPU core. In some implementations, this process of assigning 200 data shards to multiple CPU cores, so that the total data volume of the data shards fits within the cache memories, is referred to as "mini batching". In this manner, CPU-based affinitized thread process 10 maintains data shards for each CPU core that are limited to the size of the affinitized L2 cache memory to ensure that the CPU core has the highest bandwidth and the lowest latency.

In some implementations, CPU-based affinitized thread process 10 loads 102 the data shard of a respective CPU core to a corresponding affinitized cache memory. In one example, CPU-based affinitized thread process 10 loads 102 the data shard of a respective CPU core to a corresponding affinitized Level 2 (L2) cache memory. For example, CPU-based affinitized thread process 10 loads 102 (i.e., prepopulates) the data shards (e.g., data shards 224, 226) into the L2 cache memory of the respective CPU cores. As shown in FIG. 2, CPU-based affinitized thread process 10 loads 102 data shard 224 to L2 cache memory 216 and data shard 226 to L2 cache memory 210. While an example of L2 cache memory has been described for CPU-based affinitized thread process 10, it will be appreciated that CPU-based affinitized thread process 10 loads a data shard of a respective CPU core to a corresponding affinitized cache memory (e.g., L1, L2, and/or L3 cache memory).

In some implementations, CPU-based affinitized thread process 10 assigns 104 a processing thread for the data shard to the respective CPU core. For example, a processing thread (e.g., processing thread 228) is an individual executable instruction stream or sequence that is defined by an application (e.g., machine learning application 220) and executed by a CPU core. In one example concerning processing threads of machine learning application 220, each processing thread concerns computing machine learning model parameters (e.g., numeric "weight" values between the nodes in a layer of a neural network) resulting from a respective data shard. The threads are then synchronized (terminated) by machine learning application 220, so that the model parameters from each thread can be combined (averaged). In some implementations, the training process includes a warp of threads. For example, the launching and subsequent termination/synchronization of threads defines a "warp" of threads. In some implementations, after CPU-based affinitized thread process 10 processes the results from a warp of threads, machine learning application 220 then launches another warp of threads, processing the same data shard in each CPU core, to compute another set of model parameters (e.g., numeric "weight" values for the next layer in a neural network).

In some implementations, CPU-based affinitized thread process 10 executes 106 the processing thread for the data shard using the respective CPU core and the corresponding cache memory. For example, CPU-based affinitized thread process 10 may be invoked by machine learning application 220 to assign callback functions (i.e., "lambda" actions) to each CPU core. The lambda actions are typically associated with a single stage of machine learning training, executed as a "warp" of threads. As discussed above, with specific data shards assigned to a specific CPU core, each assigned data shard remains resident in the respective L2 cache memory across repeated thread warps, as machine learning application 220 training executes (e.g., assigned data shard 224 in L2 cache memory 216, and assigned data shard 226 in L2 cache memory 210). In this manner, CPU-based affinitized thread process 10 executes 106 the processing thread for the data shard using the respective CPU core and the corresponding cache memory.

In some implementations, executing 106 the processing thread includes executing 114 multiple warps of threads for the data shard using the respective CPU core and the corresponding L2 cache memory. For example, the lambda actions are modified and reset between "warps" of threads. However, CPU-based affinitized thread process 10 ensures that the data shards assigned to and processed by each thread and each CPU core will be identical between warps of threads. After assigning the lambda actions to each CPU core (and thread context), machine learning application 220 executes the next warp of threads and synchronizes with (i.e., waits on) their completions. CPU-based affinitized thread process 10 ensures the continued affinitization of data shards and threads to specific CPU cores by internally managing the affinitized thread contexts. Each thread context maintains an operating system thread, which does not actually terminate between warps of threads. CPU-based affinitized thread process 10 uses low-level operating system facilities to affinitize each managed operating system thread to a distinct and fixed CPU core.

In some implementations, the warp of threads is associated with a single stage of machine learning training for the machine learning training application. For example, machine learning application 220 treats each warp of threads as distinct stages of execution, whose threads terminate at the end of each warp. However, the underlying operating system threads are maintained and stopped from terminating, so that they can be relaunched on the same respective CPU cores at the start of the next warp of threads. As such, CPU-based affinitized thread process 10 prevents thrashing of the cache memory between respective warps of thread, and also saves the computation time that would be spent to allocate and initialize a new set of operating system threads for each successive warp of threads.

### System Overview:

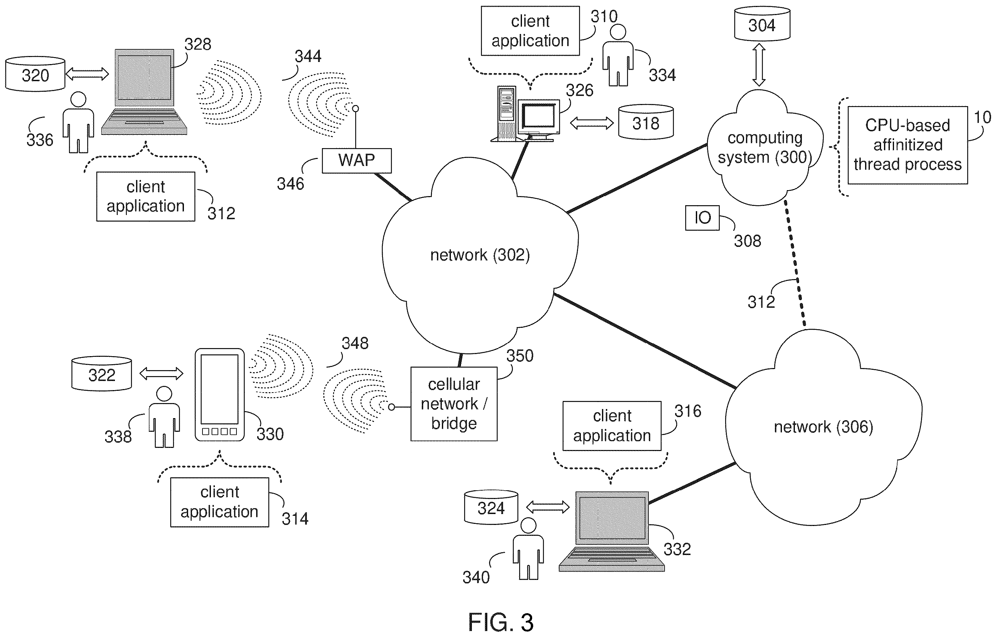

Referring to FIG. 3, a CPU-based affinitized thread process 10 is shown to reside on and is executed by computing system 300, which is connected to network 302 (e.g., the Internet or a local area network). Examples of computing system 300 include: a Network Attached Storage (NAS) system, a Storage Area Network (SAN), a personal computer with a memory system, a server computer with a memory system, and a cloud-based device with a memory system. A SAN includes one or more of a personal computer, a server computer, a series of server computers, a minicomputer, a mainframe computer, a RAID device, and a NAS system.

The various components of computing system 300 execute one or more operating systems, examples of which include: Microsoft^{®} Windows^{®}; Mac^{®} OS X^{®}; Red Hat^{®} Linux^{®}, Windows^{®} Mobile, Chrome OS, Blackberry OS, Fire OS, or a custom operating system (Microsoft and Windows are registered trademarks of Microsoft Corporation in the United States, other countries or both; Mac and OS X are registered trademarks of Apple Inc. in the United States, other countries or both; Red Hat is a registered trademark of Red Hat Corporation in the United States, other countries or both; and Linux is a registered trademark of Linus Torvalds in the United States, other countries or both).

The instruction sets and subroutines of CPU-based affinitized thread process 10, which are stored on storage device 304 included within computing system 300, are executed by one or more processors (not shown) and one or more memory architectures (not shown) included within computing system 300. Storage device 304 may include: a hard disk drive; an optical drive; a RAID device; a random-access memory (RAM); a read-only memory (ROM); and all forms of flash memory storage devices. Additionally or alternatively, some portions of the instruction sets and subroutines of CPU-based affinitized thread process 10 are stored on storage devices (and/or executed by processors and memory architectures) that are external to computing system 300.

In some implementations, network 302 is connected to one or more secondary networks (e.g., network 306), examples of which include: a local area network; a wide area network; or an intranet.

Various input / output (IO) requests (e.g., IO request 308) are sent from client applications 310, 312, 314, 316 to computing system 300. Examples of IO request 308 include data write requests (e.g., a request that content be written to computing system 300) and data read requests (e.g., a request that content be read from computing system 300).

The instruction sets and subroutines of client applications 310, 312, 314, 316, which may be stored on storage devices 318, 320, 322, 324 (respectively) coupled to client electronic devices 326, 328, 330, 332 (respectively), may be executed by one or more processors (not shown) and one or more memory architectures (not shown) incorporated into client electronic devices 326, 328, 330, 332 (respectively). Storage devices 318, 320, 322, 324 may include: hard disk drives; tape drives; optical drives; RAID devices; random access memories (RAM); read-only memories (ROM), and all forms of flash memory storage devices. Examples of client electronic devices 326, 328, 330, 332 include personal computer 326, laptop computer 328, smartphone 330, laptop computer 332, a server (not shown), a data-enabled, and a dedicated network device (not shown). Client electronic devices 326, 328, 330, 332 each execute an operating system.

Users 334, 336, 338, 340 may access computing system 300 directly through network 302 or through secondary network 306. Further, computing system 300 may be connected to network 302 through secondary network 306, as illustrated with link line 342.

The various client electronic devices may be directly or indirectly coupled to network 302 (or network 306). For example, personal computer 326 is shown directly coupled to network 302 via a hardwired network connection. Further, laptop computer 332 is shown directly coupled to network 306 via a hardwired network connection. Laptop computer 328 is shown wirelessly coupled to network 302 via wireless communication channel 344 established between laptop computer 328 and wireless access point (e.g., WAP) 346, which is shown directly coupled to network 302. WAP 346 may be, for example, an IEEE 802.11a, 802.11b, 802.11g, 802.11n, Wi-Fi^{®}, and/or Bluetooth^{®} device that is capable of establishing a wireless communication channel 344 between laptop computer 328 and WAP 346. Smartphone 330 is shown wirelessly coupled to network 302 via wireless communication channel 348 established between smartphone 330 and cellular network / bridge 350, which is shown directly coupled to network 302.

### General:

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

## Claims

1. A computer-implemented method, executed on a computing device, comprising:
assigning a data shard associated with a machine learning application to each CPU core of a plurality of CPU cores;
loading the data shard of a respective CPU core to a corresponding affinitized cache memory;
assigning a processing thread for the data shard to the respective CPU core; and
executing the processing thread for the data shard using the respective CPU core and the corresponding cache memory.

2. The computer-implemented method of claim 1, wherein the plurality of CPU cores include multiple CPU cores per CPU socket.

3. The computer-implemented method of claim 2, further comprising:
determining a number of available CPU cores of the plurality of CPU cores for executing the machine learning application.

4. The computer-implemented method of one of claims 1 to 3, further comprising:
determining a size of affinitized cache memory available per CPU core.

5. The computer-implemented method of one of claims 1 to 4, wherein assigning the data shard associated with the machine learning application to each CPU core includes limiting the data shard to the size of the affinitized cache memory available to each CPU core.

6. The computer-implemented method of claim 5, wherein the machine learning application is a machine learning training application.

7. The computer-implemented method of one of claims 1 to 6, wherein the processing thread includes a warp of threads.

8. A computing system comprising:
a memory; and
a processor configured to determine a number of available CPU cores of a plurality of CPU cores for executing a machine learning application, to determine a size of affinitized cache memory available per CPU core, to assigns a data shard associated with the machine learning application to each CPU core of a plurality of CPU cores, to load the data shard of a respective CPU core to a corresponding affinitized cache memory, to assign a processing thread for the data shard to the respective CPU core, and to execute the processing thread for the data shard using the respective CPU core and the corresponding cache memory.

9. The computing system of claim 8, at least one of:
wherein assigning the data shard associated with the machine learning application to each CPU core includes limiting the data shard to the size of the affinitized cache memory available to each CPU core;
wherein the plurality of CPU cores include multiple CPU cores per CPU socket; and
wherein the machine learning application is a machine learning training application.

10. The computing system of claim 8 or 9, wherein the processing thread includes a warp of threads.

11. The computing system of claim 10, at least one of:
wherein the warp of threads is associated with a single stage of machine learning training for the machine learning training application; and
wherein executing the processing thread includes executing multiple warps of threads for the data shard using the respective CPU core and the corresponding cache memory.

12. A computer program product residing on a non-transitory computer readable medium having a plurality of instructions stored thereon which, when executed by a processor, cause the processor to perform operations comprising:
determining a size of affinitized Level 2 (L2) cache memory available per CPU core;
assigning a data shard associated with the machine learning training application to each CPU core of a plurality of CPU cores;
loading the data shard of a respective CPU core to a corresponding affinitized L2 cache memory;
assigning a processing thread for the data shard to the respective CPU core; and
executing the processing thread for the data shard using the respective CPU core and the corresponding L2 cache memory.

13. The computer program product of claim 12, at least one of:
wherein assigning the data shard associated with the machine learning training application to each CPU core includes limiting the data shard to the size of the affinitized L2 cache memory available to each CPU core; and
wherein the plurality of CPU cores include multiple CPU cores per CPU socket.

14. The computer program product of claim 12 or 13, wherein the processing thread includes a warp of threads.

15. The computer program product of claim 14, at least one of:
wherein the warp of threads is associated with a single stage of machine learning training for the machine learning training application; and
wherein executing the processing thread includes executing multiple warps of threads for the data shard using the respective CPU core and the corresponding L2 cache memory.
